(19) **Europäisches Patentamt / European Patent Office / Office européen des brevets**

(11) **EP 4 358 342 A1**

(12) **EUROPEAN PATENT APPLICATION**

(43) Date of publication:
**24.04.2024 Bulletin 2024/17**

(21) Application number: **22383013.4**

(22) Date of filing: **21.10.2022**

(51) International Patent Classification (IPC):
**H02J 3/38** $^{(2006.01)}$    **H02J 13/00** $^{(2006.01)}$
**H02J 3/00** $^{(2006.01)}$    **H02J 3/24** $^{(2006.01)}$
**F03D 7/02** $^{(2006.01)}$

(52) Cooperative Patent Classification (CPC):
**H02J 3/38; H02J 3/001; H02J 3/24;** F03D 7/0272;
F03D 7/0284; H02J 2300/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
Innovation &
Technology S.L.
31621 Sarriguren (Navarra) (ES)**

(72) Inventors:
- **Chaqués Herraiz, Gustavo**
  **31621 Sarriguren (ES)**
- **Barenys Espadaler, Mireia**
  **28805 Alcalá de Henares (ES)**
- **Moriano Martín, Javier**
  **28807 Alcalá de Henares MADRID (ES)**
- **Sáiz Marín, Elena**
  **28009 Madrid (ES)**

(74) Representative: **SGRE-Association
Siemens Energy Global GmbH & Co. KG
SE I IM P Intellectual Property
Siemenspromenade 9
91058 Erlangen (DE)**

(54) **OPERATING A POWER CONVERTER**

(57) A method of operating a power converter (104) is provided. The power converter may be electrically coupled to a power grid (108) and outputs to the power grid converted electrical power. The power converter may be operable in a first operating mode in which the converter is operated based on a first reference ($\varepsilon_1^*$) generated by a virtual synchronous machine control scheme (201) and the power converter may be further operable in a second operating mode in which the converter is operated based on a second reference ($i_2^*$) that is not generated by the virtual synchronous machine control scheme. The method (500) may comprise switching the operation of the converter from the second operating mode into the first operating mode, wherein switching the operation may comprise obtaining (S10) one or more operating parameters while operating in the second operating mode and estimating (S15) from the one or more operating parameters a parameterization for the virtual synchronous machine control scheme. The switching the operation may further comprise parameterizing (S20) the virtual synchronous machine control scheme with the estimated parameterization and switching (S25) to the first operating mode by operating the virtual synchronous machine control scheme with the parametrization to generate the first reference ($\varepsilon_1^*$) and operating the converter based on the generated first reference.

FIG 5

500

| |
|---|
| Operating a power converter in a second operating mode in which the converter is operated based on a second reference that is not generated by a virtual synchronous machine control scheme. — S01 |
| Obtaining a command/request to switch to a first operating mode in which the converter is operated based on a first reference generated by the virtual synchronous machine control scheme. — S05 |
| Obtaining one or more operating parameters indicative of grid voltage and/or of a current provided by the converter to the grid while operating in the second operating mode. — S10 |
| Estimating from the one or more operating parameters a parameterization for the virtual synchronous machine control scheme, wherein the estimating includes calculating one or more values of the parameterization that will result in at least a part of the obtained one or more operating parameters when the converter is operated based on the first reference generated by the virtual synchronous machine control scheme, wherein the calculating comprises calculating backwards from the obtained one or more operating parameters to the parametrization. — S15 |
| Parameterizing the virtual synchronous machine control scheme with the estimated parameterization. — S20 |
| Switching to the first operating mode by operating the virtual synchronous machine control scheme with the parametrization to generate the first reference and operating the converter based on the generated first reference. — S25 |

EP 4 358 342 A1

**Description**

FIELD OF THE INVENTION

The present invention relates to a method of operating a power converter, in particular of a wind turbine. It further relates to a computer program for performing such method and a control system configured to carry out such method. It further relates to a power generation system that comprises a power converter and such control system.

BACKGROUND

The electrical power provided by an electrical power generation system is usually fed into a power grid. In order to maintain the stability of a power grid, the generated electrical power has to fulfill stringent grid codes. Due to the increasing variety of renewable energy sources, e.g. wind turbines or solar cells, power converter based generation has become considerable and is expected to convert the generated electrical power appropriately and to maintain the stability. The converters are designed to perform conventionally a grid-feeding/grid-following operation or lately a grid-forming operation. For the grid-feeding/grid-following operation, a converter behaves as a current source and synchronizes the electrical power output with the dynamics of the power grid. For the grid-forming operation, a converter is operated as a voltage source, imposes voltage and frequency, and participates in prescribing a grid voltage and frequency.

A grid-forming control scheme may implement a virtual synchronous machine. The virtual synchronous machine is used to mimic a synchronous generator in order to provide synthetic inertia for ancillary services and, thus, to maintain grid stability. However, due to the converter based generation, a virtual synchronous machine is considerably limited in its capability to output current. In contrast to a real synchronous generator, the virtual synchronous generator is not capable to sustain its inner electromotive force by injecting large amounts of reactive current. Hence, the virtual synchronous machine may not be able to follow a provided reference electromotive force without exceeding said current limitation during a demanding grid fault.

For this reason, current limiting algorithms may be applied in grid forming mode. The current limiting algorithms may however cause a misalignment between the reference grid voltage and the actual voltage during the grid fault. The misalignment may cause d- and q- axis currents that no longer correspond to active and/or reactive power and, thus, may cause uncontrolled active and reactive power.

In order to maintain controlled active and reactive power, a switching from grid forming mode to grid following mode during such grid fault is performed. This way, a current limited operation is feasible without losing the alignment of the d- and q-axis.

However, the known control schemes that are related to the switching of operating modes may create an oscillating system response of the converter (i.e., transients) when it is again switched to the grid forming mode after the full power capabilities are recovered, i.e., when the grid fault is cleared. Similar to the resynchronization transient of a real synchronous generator after a grid fault, said transients may be caused due to a mismatch between the actual operating point and the operating point that is required to provide the desired power flow after the switching.

Moreover, an imbalance within the power grid between generation and demand of electrical power after a grid fault may inevitably introduce a transient which requires a response of the generators coupled to the grid as soon as possible. However, the known control schemes require a certain amount of time to be resynchronized and, thus, are limited in their response time and, thus, in their contribution to the grid stability.

SUMMARY OF THE INVENTION

Accordingly, there is the need to mitigate at least some of the drawbacks mentioned above and to provide a solution that allows a more stable operation of a power converter, and in particular, to provide a solution that allows smoother and faster switching between operating modes of such a power converter.

This need is met by the features of the independent claims. The dependent claims describe embodiments of the invention.

According to an aspect of the invention, a method of operating a power converter is provided. The power converter is electrically coupled to a power grid and outputs to the power grid converted electrical power. The power converter is operable in a first operating mode in which the converter is operated based on a first reference generated by a virtual synchronous machine control scheme and the power converter is further operable in a second operating mode in which the converter is operated based on a second reference that is not generated by the virtual synchronous machine control scheme. The method comprises switching the operation of the converter from the second operating mode into the first operating mode. Switching the operation comprises obtaining one or more operating parameters indicative of grid voltage and/or of a current provided by the converter to the grid while operating in the second operating mode and estimating from the one or more operating parameters a parameterization for the virtual synchronous machine control scheme. The estimating includes calculating one or more values of the parameterization that will result in at least a part of the obtained one or more operating parameters when the converter is operated in this first operating mode with this first reference generated by the virtual synchronous machine control scheme. Switching the operation further comprises parameterizing the virtual synchronous machine control scheme with the estimated parameterization and switching to the first operating mode by operating the virtual synchronous machine control scheme with the parametrization to generate the first reference and operating the converter based on the generated first reference.

The parameterization of the first operating mode of the power converter control may thus be determined based on the one or more operating parameters obtained during the operation in the second operating mode and set before switching to the first operating mode. This way, the first reference is aligned to the second reference such that when the first operating mode takes over from the second operating mode, the operation in the first operating mode continues from the same operating point in which the second operating mode has stopped its operation. The alignment hence may ensure that the actual operating point of the first operating mode of the converter corresponds to the operating point of the converter in the second operating mode at the time of switching. In other words, the power converter may be capable of smoothly transitioning to the first operating mode by taking over the corresponding operating point of the second operating mode from which the power converter then continues its operation. Since the operating point is taken over and remains unchanged, control related transients may not occur when it is switched. Accordingly, the stability of the operation of the power converter is improved. Moreover, as the switching is stably performed and as the first operating mode takes over control, the converter provides ancillary services immediately after the switching. The transition between the operating points is no longer critical with respect to stability, since the system is stably synchronized and continuously provides ancillary services and, thus, contributes to an improved stability of the power grid.

The converted electrical power may comprise active power and/or reactive power.

The power converter may comprise a converter for converting electrical energy. The power converter may convert alternating current (AC) into direct current (DC) and vice versa, or AC to AC. The power converter may change the voltage and/or frequency of the current. The power converter may comprise a DC-link.

In an example, obtaining may herein comprise monitoring. Monitoring may for example be performed - but is not limited to - by means of at least one of a sensor, a sensoring system, a model, in particular a mathematical and/or physical model, being implemented in software, and a filter based monitoring system, which may for example be a state observer, Kalman filter or the like. Monitoring may further comprise signal pre- and post-processing, e.g. filtering. Further, monitoring may utilize information received from hardware, e.g. one or more sensors, that is implemented for the purpose of monitoring and/or may utilize information received from hardware that is implemented for another purpose. Monitoring may further comprise an estimating and/or predicting, preferably based on received information.

The parameterizing may be performed, during the operation in the second operating mode, when the operating point can be monitored (e.g., when no excessive components exist above the Nyquist frequency caused by abrupt voltage changes).

Any parameter or value herein, e.g. a parameter or value that is obtained, received, monitored, calculated or estimated, may comprise a complex number. E.g., such parameter or value may comprise a magnitude and a phase angle/an argument associated with the magnitude. Further, a symbol j may herein represent the imaginary unit and a symbol e may herein represent Euler's number. Accordingly, a complex parameter y may comprise a magnitude Y and a phase angle $\varphi_Y$ and, thus, be represented as

$$y = Y\, e^{\wedge}(j\, \varphi_Y).$$

In an example, the current provided by the converter to the grid may comprise a current of the converted electrical power that is output to the grid.

In an example, the one or more operating parameters may comprise alternatively or additionally to the one or more parameters indicative of the current provided by the converter to the grid while operating in the second operating mode, one or more parameters indicative of a reference current in accordance with which the current is provided by the converter to the grid while operating in the second operating mode.

In an example, the at least part of the obtained one or more operating parameters may comprise a current provided by the converter to the grid while operating in the second operating mode and/or a reference current in accordance with which the current of the converted electrical power is output to the grid.

The first reference may comprise a reference voltage, in particular a reference voltage magnitude and a reference voltage phase angle. The reference voltage may be generated by the virtual synchronous machine control scheme. Preferably, the reference voltage may correspond to an electromotive force generated by the virtual synchronous machine control scheme.

The reference voltage may be a rotating reference voltage. The electromotive force may be a rotating electromotive force, a magnitude and phase angle of which are generated by the virtual synchronous machine control scheme.

The first operating mode may comprise a grid forming mode. In the grid forming mode the power converter may be operated as a voltage source. Preferably, in the first operating mode, the power converter outputs the converted electrical power in accordance with a (externally received) reference power. The externally received reference power may be received from a transmission system operator.

The second operating mode may comprise a grid following mode. In the grid following mode, the power converter may be operated as a current source. Preferably, operating in the second operating mode may comprise performing a fast fault current injection.

For example, in case of a grid fault, the operation of the power converter may be switched from the first operating mode (grid forming mode) to the second operating mode (grid following mode) in which the converter is not required to provide currents beyond respective current limits. For example, during operation the second operating mode, fast reactive current injection based on grid code requirements may be applied. When the grid has recovered from the grid fault and full power capabilities are recovered, the converter may be switched from the second operating mode to the first operating mode. As due to the parameterizing, the operating point may be taken over by the first operating mode from the second operating mode, the transition is smooth and instantaneous. Accordingly, the transition does not cause transients. Since the first operating mode starts from its estimated steady operating point, the stability of the operation of the power converter is improved.

The virtual synchronous machine control scheme may be parameterized such that with the estimated parameterization, the virtual synchronous machine control scheme will generate the first reference that results in the obtained operating parameter (s) .

This, way the resulting operating parameter(s) correspond to the operating parameter(s) previously obtained from the second operating mode.

According to an example, calculating one or more values of the parameterization may comprise calculating backwards from the obtained one or more operating parameters to the parametrization.

According to an example, estimating the parameterization may comprise estimating from the one or more operating parameters the first reference. The estimating may include calculating one or more values for the first reference that will result in the at least part of the obtained one or more operating parameters when the converter is operated based on the estimated first reference.

According to an example, the second reference may be a reference current and the obtained operating parameters may include the reference current or obtained converter output current and the grid voltage. Calculating the one or more values for the first reference may comprise calculating a reference voltage magnitude and a reference phase angle from the reference current or the output current, the grid voltage and a virtual impedance associated with the virtual synchronous machine control scheme. Preferably, calculating the one or more values for the first reference may comprise calculating a frequency indicative of the change of the reference phase angle from the grid voltage.

The virtual impedance may be predetermined and preferably indicative of an impedance of a virtual machine/virtual (synchronous) generator. Preferably, the impedance comprises an inductive portion.

According to an example, a computation cycle may comprise generating a value of the first and/or the second reference. Both the parameterizing and the switching may be performed in one computation cycle or, alternatively, the parameterizing may be performed in a first computation cycle and the switching may be performed in a second computation cycle and the first computation cycle may be performed before the second computation cycle.

According to an example, the method may comprise operating the power converter in the first operating mode and operating in the first operating mode may comprise determining that a grid fault has occurred and, in response to the determining, switching from the first operating mode to the second operating mode. Additionally or alternatively, operating in the second operating mode may comprise obtaining an indication to switch to the first operating mode and, in response to the obtained indication, performing the switching from the second operating mode to the first operating mode. Preferably, the indication may be obtained when the grid has recovered from a grid fault.

It is noted, that after a grid event, i.e. a fault, full power capabilities of the converter may no longer be available. As mentioned, in response to determining the grid event, it is switched to the second operating mode. Accordingly, the indication may be obtained when the converter has recovered its full power capabilities, i.e., when the grid fault has been cleared.

In an example, the method may comprise operating the power converter in the first operating mode. Operating in the first operating mode may comprise determining that the first reference and/or a reference current that is determined based on the first reference exceeds a respective predetermined threshold and in response to the determining, switching from the first operating mode to the second operating mode.

According to an example, operating the power converter in the second operating mode may comprise stopping a computation of at least a portion of the virtual synchronous machine control scheme. Preferably, the portion comprises one or more integrator units.

As a computed output of at least a portion of the virtual synchronous machine control scheme is not further used, the computing of said output may be stopped and, thus, a total number of computation steps required by/in each computation cycle may be reduced. Accordingly, the computational performance of the method may be increased.

According to an example, the virtual synchronous machine control scheme may comprise one or more integrator units and each integrator unit of the one or more integrator units may output a sum of an initial value and of an integral of a signal that is input to the integrator unit. The parameterizing may comprise setting, based on values of the estimated parameterization, one or more initial values of the one or more integrator units. Preferably, the integral of the signal is an integral with respect to time.

According to an example, the one or more initial conditions may comprise one or more of an initial magnitude of the first reference, an initial phase angle of the first reference and an initial frequency of the first reference.

Preferably, the initial magnitude and the initial phase angle may comprise an initial voltage magnitude and voltage phase angle, respectively. More preferably, the initial frequency may comprise a derivative of the initial voltage phase angle.

It should be clear that the setting may be performed repeatedly. Accordingly, the setting may comprise a resetting.

As the outputs of the integrator units may correspond to the (multi-dimensional) state of a state-space representation of the virtual synchronous machine control scheme, setting or resetting the initial conditions of the integrator units corresponds to setting or resetting the state of the virtual synchronous machine control scheme. In other words, the virtual synchronous machine control scheme is (re)initialized. As the state associated with the first operating mode is set or reset in accordance with the one or more operational parameters that are obtained when operating in the second operating mode, the first operating mode is aligned to an actual state of the second operating mode. As the states (operational parameters) correspond to each other, there is no difference between generating a reference corresponding to the second reference when operating in the first operating mode (second reference is set based on the first reference) or in the second operating mode (second reference is set independently). Thus, a smooth transition is possible.

In an example, the initial conditions may comprise at least one of an initial voltage phase angle, an initial voltage magnitude and an initial speed.

According to an example, a current of the converted electrical power output to the grid may be controlled by a current control in accordance with a controller reference current and the second reference may be a reference current. The method may comprise inputting the second reference as controller reference current to the current control when the power controller is operated in the second operating mode and the switching from the second operating mode to the first operating mode may comprise inputting a first reference current derived from the first reference as controller reference current to the current control instead of the second reference current.

Switching the input to the current control to implement the switching between the first and second operating modes is beneficial, since in both the first and the second operating modes a reference current for a current control is generated. Accordingly, switching the reference current that is fed into the current control results in a smooth transition between the operating mode when the reference current generated in the first operating mode and the reference current generated in the second operating mode are aligned to each other, i.e., when no difference exists between both reference currents.

In an example, estimating the parameterization comprises estimating one or more reference powers for the virtual synchronous machine control scheme. Preferably, the estimating is based on a virtual impedance.

According to an example, the converted electrical power may be output to the grid in accordance with a reference power in the first operating mode. The switching from the second operating mode to the first operating mode may comprise obtaining a power parameter indicative of the electrical power that is output to the grid when operating in the second operating mode and setting the reference power to the power parameter.

The reference power may comprise a reference active power and/or a reference reactive power. The converted electrical power output to the grid may comprise an active power that is output in accordance with the reference active power and/or a reactive power that is output in accordance with the reference reactive power.

As a result, a control error between the electrical power that is output to the grid and the reference power may be small or may not exist and, thus, the power output to the grid is not abruptly changed when the power converter switches from the second operating mode to the first operating mode. Accordingly, the transition may be even smoother since control errors are forced to zero when the first operating mode takes over.

According to an example, the switching from the second operating mode to the first operating mode may further comprise transforming the reference power set to the power parameter into a further reference power in accordance with a predetermined transforming function. Preferably, the predetermined transforming function may depend on time.

The transforming function may be predetermined based on closed loop dynamics of the virtual synchronous machine.

The further reference power may comprise a reference power according to which the power converter outputs the converted electrical power when the power converter is operated in the first operating mode. The further reference power may comprise a further reference active power and/or a further reference reactive power. The further reference power may comprise an external reference power that preferably is received from an external source, e.g. from a grid or from an external controller as for example a power plant controller that may for example be comprised by a wind farm. The external reference power may for example be received as power dispatch commands.

The transforming function may comprise a ramp function or a sigmoid function. The ramp function or sigmoid function may define a transition, in particular a time dependent transition, between the reference power set to the power parameter and the further reference power. E.g., the ramp function or sigmoid function may increase or decrease from the reference power set to the power parameter to the further reference power at an initial time within a predetermined time period.

It should be clear that the transforming function is not limited to the given exemplary implementations. The transforming function may comprise any function that goes from zero to one. For example, a step function may be comprised by the transforming function.

The transforming may allow transitioning from the reference power that does not yield to a control error to the further reference power in a controlled way. The dynamics of the transition between the reference powers may be predetermined by parameterizing the transforming function. Accordingly, the transition between the first and the second operating mode may be even smoother. Since the power converter already operates in the first operating mode during the transforming, ancillary service may be provided fast and, thus, the contribution to the grid stability is improved.

It should be clear that switching to the first operating mode may be performed at any time, even without adjusting the reference power and that when the adjusting is applied that the transition to the first operating mode is optimized. However, when the adjusting is not applied, a smooth transition between the operating modes is nevertheless performed. Not adjusting the reference power is equivalent to using a transforming function comprising a step function and to starting the operation in the first operating mode with non-zero control errors. This only results in a change of the output converted electrical power that does not follow the dynamic of the transforming function. However, the change is still limited/damped by the system behavior defining the dynamic of the output converted electrical power in response to the input reference power.

According to another aspect of the invention, a power converter is provided. The power converter is configured to be electrically coupled to a power grid and to output to the power grid converted electrical power. The power converter is operable in a first operating mode in which the converter is operated based on a first reference generated by a virtual synchronous machine control scheme. The power converter is further operable in a second operating mode in which the converter is operated based on a second reference that is not generated by the virtual synchronous machine control scheme. The power converter is configured to perform any of the methods described herein.

According to another aspect of the invention, a control system for controlling an operation of a power converter is provided. The power converter is configured to be electrically coupled to a power grid and to output to the power grid converted electrical power. The power converter is operable in a first operating mode in which the power converter is operated based on a first reference generated by a virtual synchronous machine control scheme. The power converter is further operable in a second operating mode in which the converter is operated based on a second reference that is not generated by the virtual synchronous machine control scheme. The control system is configured to perform any of the methods described herein.

The control system may be configured to be coupled to the power converter. The control system may be a control system external to the power converter, i.e. not included in the power converter, or may be an internal control system, i.e. included in the power converter.

The control system may for example comprise a processing unit and a memory unit, the memory unit storing control instructions which when executed by the processing unit of the control system, cause the control system to perform any of the herein described methods. The processing unit may for example comprise a digital signal processor, an application specific integrated circuit, a field programmable gate array, a microprocessor or the like. The memory unit may comprise RAM, ROM, Flash Memory, a hard disk drive and the like.

According to another aspect of the invention, a power generation system is provided. The power generation system comprises any of the power converters described herein. The power converter is electrically coupled to a power grid and to output to the power grid converted electrical power. The power generation system further comprises any of the control systems described herein and at least one power generation unit configured to provide the electrical power to the power converter. The control system is coupled to the power converter to control the operation of the power converter.

The at least one power generation unit may comprise a component being capable of receiving and/or outputting electrical power, e.g. an electrical generator, for example the generator of a wind turbine, in particular an asynchronous or synchronous generator, or a photovoltaic system, e.g. a photovoltaic module, or an energy storage system, or the like or a combination of such components. When the at least one power generation unit comprises more than one power generation unit, the more than one power generation unit may be coupled to each other by an electrical coupling means that is electrically coupled to the power converter, e.g. the more than one power generation units may provide electrical power to the power converter via a DC-link.

According to another aspect of the invention, a wind turbine is provided. The wind turbine is configured to provide generated electrical power to any of the herein described power converters.

According to another aspect of the invention, a computer program for controlling the operation of a power converter is provided. The computer program comprises control instructions which, when executed by a processing unit of a control system controlling the operation of the power converter, cause the processing unit to perform any of the methods described herein. The computer program may be provided on a volatile or non-volatile storage medium or data carrier.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

It should further be clear that the sequence of method steps of a method described herein is not limited to the described sequence. Further, the method is not limited to the described number of steps. Individual steps of the method may be substituted, extended or not performed.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1 is a schematic drawing illustrating a power generation system according to an example.

Fig. 2 is a schematic drawing showing a control system and a signal flow chart illustrating an operation of the control system according to an example.

Fig. 3 is a schematic signal flow chart illustrating an operation of a virtual synchronous machine implemented by the control system according to an example.

Fig. 4 is a schematic signal flow chart of a reference magnitude generating unit comprised by the virtual synchronous machine according to an example.

Fig. 5 is a schematic flow diagram illustrating a method of operating a power converter according to an example.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

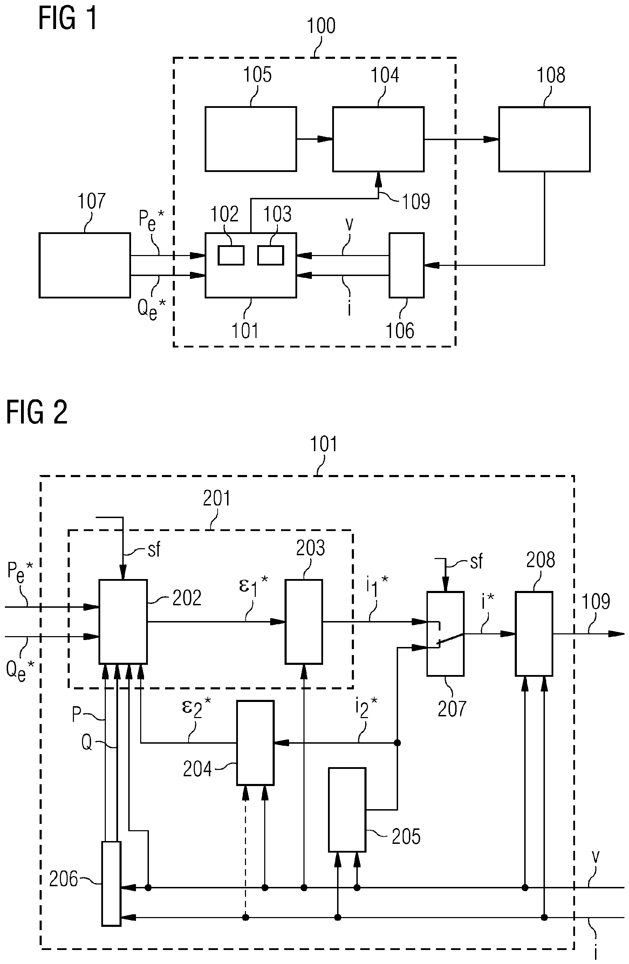

Figure 1 is a schematic drawing illustrating a power generation system 100 according to an example.

The power generation system 100 may comprise a control system 101, a power converter 104 and a power generation unit 105. The power converter 104 may be configured to be electrically coupled to a power grid 108 and to output to the power grid 108 converted electrical power. The converted electrical power may be converted from electrical power that is provided to the power converter 104 from the power generation unit 105.

The converting may be based on a control signal 109 that is generated by the control system 101 to control an operation of the power converter 104 and that is provided to the power converter 104. E.g., the control signal 109 may comprise a pulse width modulation signal to control switching devices comprised by the converter 104, as for example semiconductor switches. The control system 101 may comprise a processing unit 102 and a memory unit 103, the memory unit 103 storing control instructions which when executed by the processing unit 102 of the control system 101, cause the control system 101 to perform said operation of the power converter 104. In order to generate the control signal 109, the control system 103 may comprise an obtaining unit 106 configured to obtain one or more operating parameters indicative of actual grid voltage v and/or of actual current i that is injected by the converter 104 to the grid 108. The grid voltage v may be obtained as complex number comprising a magnitude V and a phase angle $\varphi_V$. The current i may be obtained as complex number comprising a magnitude I and a phase angle $\varphi_I$. The grid voltage v may for example be monitored, e.g. by measuring, at a point of common coupling of the grid 108 and the power converter 104 or the power generation system 100. The current i that is injected by the converter 104 may for example be monitored, e.g. by measuring, at an output of the power converter 104 or of the power generation system 100. The converting may further be based on an external reference power that is obtained by the control system 101 from an external reference power provision unit 107. The external reference power may comprise an external reference active power $P_e^*$ and an external reference reactive power $Q_e^*$.

Figure 2 is a schematic drawing showing the control system 101 and a signal flow chart illustrating an operation of the control system 101 according to an example.

The control system 101 may comprise a current control 208. The current control 208 may output the control signal 109 in response to an obtained complex controller reference current i* and the actual current i. Preferably, the output control signal 109 may further depend on voltage v, e.g. when feed-forward terms are implemented. Based on the switching state of switch 207, the controller reference current i* is equal to complex reference current $i_1^*$ generated by virtual synchronous machine control scheme (VSM control scheme) 201 or equal to complex reference current $i_2^*$ generated by reference current generating unit 205. The switching of switch 207 between its two switching states may be controlled by switching flag sf. E.g., the switching flag may be represented as a one bit signal that may for example be implemented using a Boolean datatype, wherein each of the two states of the datatype corresponds to one of the states of switch 207. For example, when the switching flag sf is activated, it may be switched from the first operating mode to the second operating mode. And, when the switching flag sf is deactivated, the parameterizing may be performed and it may be switched back to the first operating mode.

When the power converter 104 is operated in a first operating mode, e.g. comprising a grid forming mode, the switch 207 is switched such that the reference current i* is equal to reference current $i_1^*$ and when the power converter 104 is operated in a second operating mode, e.g. comprising a grid following mode, the switch 207 is switched such that the reference current i* is equal to reference current $i_2^*$.

In an example, it may be switched from the first operating mode to the second operating mode in response to determining that a grid fault occurs. The grid fault may for example comprise a voltage and/or frequency distortion. In another example, it may be switched from the second operating mode to the first operating mode in response to determining that the grid has recovered from the grid fault or in response to an obtained request to switch. The switching flag sf may be generated accordingly.

The reference current $i_2^*$ may be generated by the reference current generating unit 205 based on the voltage v and/or the current i. The current $i_2^*$ may be generated by using a grid following control scheme, e.g. for performing a fast fault current injection operation. Accordingly, when the reference current $i_2^*$ is fed into the current control 208, the electrical power that is output to the grid 108 may no longer follow the obtained external reference powers $P_e^*$ and $Q_e^*$.

The reference current $i_1^*$ may be generated by the VSM control scheme 201. The reference current $i_1^*$ may be generated based on the external reference active power $P_e^*$, the external reference reactive power $Q_e^*$, an actual power P, an actual reactive power Q, and the grid voltage v.

The control system 101 may comprise a power determining unit 206 configured to determine, based on the obtained grid voltage v and the obtained current i, the actual electrical power that is output to the grid 108. The determined actual electrical power may comprise the actual active power P and the actual reactive power Q. The determining may be based on the equations

$$P = k \ V \ I \ \cos(\varphi_V - \varphi_I) \qquad\qquad \text{eq. 01,}$$

and

$$Q = k \ V \ I \ \sin(\varphi_V - \varphi_I) \qquad\qquad \text{eq. 02,}$$

wherein V is the magnitude and $\varphi_V$ is the phase angle of the obtained grid voltage v, wherein I is the magnitude and $\varphi_I$ is the phase angle of the obtained current i, and wherein k is a constant gain.

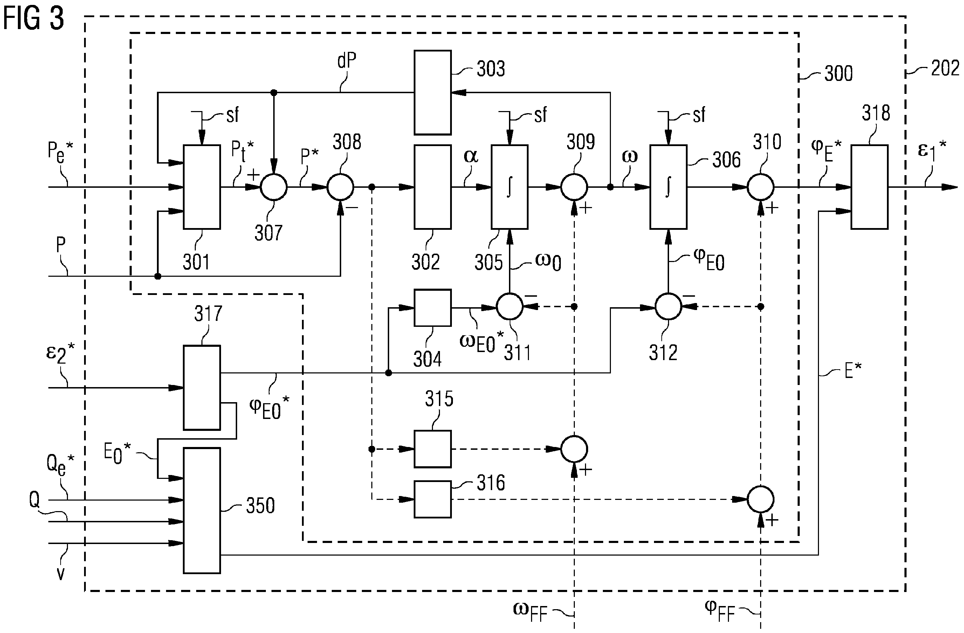

The VSM control scheme 201 may comprise a virtual synchronous machine (VSM) 202. The VSM 202 generates a complex reference electromotive force $\varepsilon_1^*$ based on the external reference active power $P_e^*$, the external reference reactive power $Q_e^*$, the actual power P, the actual reactive power Q and the grid voltage v. The complex reference electromotive force $\varepsilon_1^*$ may comprise a reference magnitude E* and a reference phase angle $\varphi_E^*$ (as shown in figure 3), similarly to the electromotive force induced in a stator of a real synchronous generator. The reference electromotive force $\varepsilon_1^*$ may be provided to a virtual impedance based reference current generating unit 203 in order to generate the reference current $i_1^*$. The virtual impedance based reference current generating unit 203 may implement an equation of

$$i_1{}^* = 1/Z_v (\varepsilon_1{}^* - v) \qquad\qquad eq. \; 03,$$

wherein $Z_v$ is a complex virtual impedance. The complex virtual impedance may be predetermined and may for example comprise an impedance of the VSM 202. Preferably, the impedance may be inductive, i.e. a complex number comprising a positive imaginary part (similarly to a stator leakage impedance of a real synchronous generator).

The VSM control scheme 201 may further obtain a complex reference electromotive force $\varepsilon_2{}^*$ that may be backwards calculated by virtual impedance based backwards calculation unit 204. The reference electromotive force $\varepsilon_2{}^*$ may only be generated when it is operated in the second operating mode, i.e. when i* is set to $i_2{}^*$. The reference electromotive force $\varepsilon_2{}^*$ may be generated based on the reference current $i_2{}^*$, the grid voltage v and the virtual impedance $Z_v$. Alternatively, the current i may be used instead of reference current $i_2{}^*$. The virtual impedance based backwards calculation unit 204 may backwards implement equation eq. 03 in order to generate the reference electromotive force $\varepsilon_2{}^*$ by

$$\varepsilon_2{}^* = Z_v \, i_2{}^* + v \qquad\qquad eq. \; 04.$$

It should however be clear that the backwards calculation may be based on a model that differs from that of equation eq. 04 and that equation eq. 04 is considered herein as an exemplary implementation of such a model.

The backwards calculated reference electromotive force $\varepsilon_2{}^*$ may be used to parameterize the VSM control scheme 201, in particular the VSM 202, before the operating mode is switched from the second operating mode to the first operating mode. As a result of the parameterizing, when it is then switched from the second operating mode to the first operating mode, the reference electromotive force $\varepsilon_1{}^*$ is initially set to reference electromotive force $\varepsilon_2{}^*$ and, accordingly, the reference current $i_1{}^*$ is initially set to reference current $i_2{}^*$. This way, the operation in the first operating mode continues from the same operating point in which the second operating mode has stopped its operation and, thus, the first operating mode smoothly takes over from the second operating mode.

Figure 3 is a schematic signal flow chart illustrating an operation of the VSM 202 implemented by the control system according to an example.

The dashed arrows in figure 3 indicate an optional part of the signal flow chart. In the following figure 3 is described without considering the optional part of the flow chart. Accordingly, the optional input to summation points 309, 310, 311 and 312 is considered to be set to zero.

The VSM 202 may comprise a reference phase angle generating unit 300 and a reference magnitude generating unit 350. The reference phase angle generating unit 300 may generate the reference phase angle $\varphi_E{}^*$ of the reference electromotive force $\varepsilon_1{}^*$ based on the external reference active power $P_e{}^*$ and the active power P. The reference magnitude generating unit 350 may generate the reference magnitude E* of the reference electromotive force $\varepsilon_1{}^*$ based on the external reference reactive power $Q_e{}^*$, the reactive power Q and the grid voltage v. The reference magnitude E* and the reference phase angle $\varphi_E{}^*$ may be combined to the complex reference electromotive force $\varepsilon_1{}^*$ by combining unit 318.

The reference phase angle $\varphi_E{}^*$ may be generated by integrator unit 306. The integrator unit 306 may output a sum of an initial value of the reference phase angle $\varphi_E{}^*$ and an integral over time of virtual synchronous machine speed $\omega$. The speed $\omega$ may be generated by integrator unit 305. The integrator unit 305 may output a sum of an initial value of the speed $\omega$ and an integral over time of virtual synchronous machine acceleration $\alpha$. The acceleration $\alpha$ may be generated by gain unit 302. The gain unit 302 may output a product of a gain and an active power control error that is output by summation point 308. In an example, the gain of gain unit 302 may be a constant and may be predetermined based on base frequency $\omega_b$ and a predetermined inertia $J_v$ of the VSM 202. The control error that is output by summation point 308 may be generated by subtracting the actual active power P from reference active power P*. The reference active power P* may be output by summation point 307 and comprise a sum of reference active power $P_t{}^*$ and P-f droop active power dP. The P-f droop active power dP may be generated by P-f droop unit 303 based on speed $\omega$. The reference active power $P_t{}^*$ may be generated by transforming unit 301 based on the P-f droop active power dP, the active power P and the external reference active power $P_e{}^*$.

When it is switched from the second operating mode to the first operating mode which may be indicated by switching flag sf, e.g. by a rising or falling signal edge, the parameterizing of the VSM 202 and thus of the VSM control scheme 201 is performed. The parameterizing may comprise setting or resetting the initial values of the integrator unit 305 and the integrator unit 306. Accordingly, the initial value of the integrator unit 305 may be set to an initial speed $\omega_0$ and the initial value of integrator unit 306 may be set to an initial phase angle $\varphi_{E0}$. The initial phase angle $\varphi_{E0}$ may be equal to a reference initial phase angle $\varphi_{E0}{}^*$ which is the phase angle of the complex reference electromotive force $\varepsilon_2{}^*$. The initial speed $\omega_0$ may be equal to a reference initial speed $\omega_{E0}{}^*$ which may be generated by differential unit 304 by differentiating the reference initial phase angle $\varphi_{E0}{}^*$ over time. The reference initial phase angle and a respective reference initial magnitude $E_0{}^*$ of the reference electromotive force $\varepsilon_2{}^*$ may be separately output by a separating unit 317.

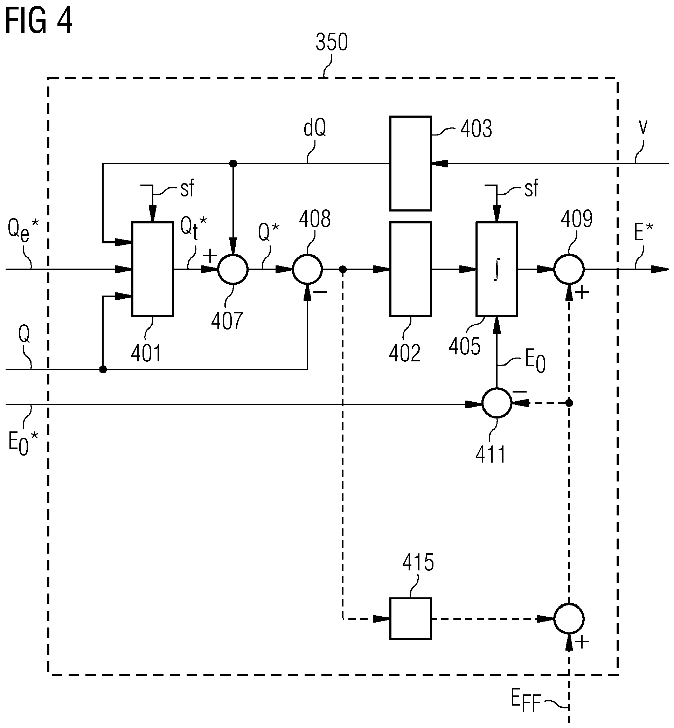

In other words, when it is switched from the second operating mode to the first operating mode, the VSM control scheme 201 is set such that the computation of the reference current $i_1^*$ continues operation starting from the last computed reference current $i_2^*$. The operation in the first operating mode may be continued either instantly based on the external reference powers $P_e^*$ and $Q_e^*$ or based on the reference powers $P_t^*$ and $Q_t^*$ (as shown in figure 4) generated by transforming units 301 and 401 (as shown in figure 4). In the latter case, the reference powers $P_t^*$ and $Q_t^*$ may be transformed into or set to the external reference powers $P_e^*$ and $Q_e^*$ in accordance with a predetermined dynamic. The predetermined dynamic may be triggered by switching flag sf and may be implemented by a predetermined transforming function.

For this purpose, the transforming unit 301 may implement an equation set according to

$$P_t^*(t) = (P(t_r)-dP(t_r)) \ (1-N(t)) + P_e^*(t) \ N(t) \qquad \text{eq. 05,}$$

and

$$N(t) = \left\{ \begin{array}{lll} 0 & \text{if } t \leq t_r \\ f(t) & \text{if } t_r < t < t_f \\ 1 & \text{if } t \geq t_f \end{array} \right. \qquad \text{eq. 06,}$$

wherein t is time, $t_r$ is the point of time when it is switched to the first operating mode, $t_f$ is the point of time when the transforming is finished, and f(t) is the predetermined transforming function.

The transforming function f(t) may comprise for example a ramp function or sigmoid function, the output value of which is increased over time from zero to one, wherein zero is output when t is equal to tr and one is output when t is equal to $t_f$. A different type of transforming function may be chosen based on the virtual synchronous machine closed loop dynamics.

As can be seen from equations eq. 05 and eq. 06, the control error that is output by summation point 308 may be set to zero for $t \leq t_r$. The acceleration $\alpha$ is thus also set to zero. Accordingly, the reference phase angle $\varphi_E^*$ of the reference electromotive force $\varepsilon_1^*$ is equal to the reference initial phase angle $\varphi_{E0}^*$ of the reference electromotive force $\varepsilon_2^*$ when it is switched to the first operating mode. In the subsequent computing cycles, when it may already be operated in the first operating mode, the reference active power $P_t^*$ may be smoothly transformed from $P_t^* = P(t_r)-dP(t_r)$ into $P_t^* = P_e^*(t)$, thereby reconnecting the VSM control scheme 201 with the external power reference $P_e^*$.

In the following, the optional part of the signal flow chart shown in figure 3 is considered. The optional part shows a modification of the control scheme of the reference phase angle generation unit 300 according to an exemplary implementation. The modification may comprise a feed forward control structure and proportional signal paths in parallel to integrator units 305, 306. Using the optional modification may require to force/to initially set speed $\omega$ to an estimated or predetermined value when starting the control scheme of the reference phase angle generation unit 300. According to the modification, a first sum of an obtained feed forward speed $\omega_{FF}$ and the control error amplified by gain unit 315 may be added at summation point 309 to the output of integrator unit 305. The gain unit 315 may comprise a (predetermined) constant such that the output of gain unit 315 may comprise a product of the control error and the constant. Further, a second sum of an obtained feed forward phase angle $\varphi_{FF}$ and the control error amplified by gain unit 316 may be added at summation point 310 to the output of integrator unit 306. The gain unit 316 may comprise a (predetermined) constant such that the output of gain unit 316 may comprise a product of the control error and the constant. As the summation points 309 and 310 are arranged downstream of the integrator units 305 and 306 in the shown example, the first sum and the second sum have to be subtracted from the reference initial speed $\omega_{E0}^*$ and the reference initial phase angle $\varphi_{E0}^*$, respectively. This way, it is ensured that the speed $\omega$ is equal to the reference initial speed $\omega_{E0}^*$ and that the reference phase angle $\varphi_E^*$ is equal to the reference initial phase angle $\varphi_{E0}^*$ when it is switched from the second operating mode to the first operating mode.

It should be clear from the above that a modification of the control scheme of the reference phase angle generation unit 300 may require modifying the computation of the initial values of the integrator units 305, 306. Further, it may require modifying the implementation of the transforming unit 301.

Figure 4 is a schematic signal flow chart of the reference magnitude generating unit 350 comprised by the virtual synchronous machine 202 according to an example.

Similar to figure 3, the dashed arrows in figure 4 indicate an optional part of the signal flow chart. In the following figure 4 is described without considering the optional part of the flow chart. Accordingly, the optional input to summation points 409 and 411 is considered to be set to zero.

The reference magnitude generating unit 350 may generate the reference magnitude E* of the reference

electromotive force $\varepsilon_1^*$ based on the external reference reactive power $Q_e^*$, the reactive power Q and the grid voltage v.

The reference magnitude E* may be generated by integrator unit 405. The integrator unit 405 may output a sum of an initial value of the reference magnitude E* and an integral over time of an output generated by gain unit 402. The gain unit 402 may output a product of a gain and a reactive power control error that is output by summation point 408. In an example, the gain of gain unit 402 may be a constant and may be predetermined. The control error that is output by summation point 408 may be generated by subtracting the actual reactive power Q from reference reactive power Q*. The reference reactive power Q* may be output by summation point 407 and comprise a sum of reference reactive power $Q_t^*$ and Q-V droop reactive power dQ. The Q-V droop reactive power dQ may be generated by Q-V droop unit 403 based on the grid voltage v or on a magnitude V of the grid voltage v. The reference reactive power Qt* may be generated by transforming unit 401 based on the Q-V droop reactive power dQ, the reactive power Q and the external reference reactive power $Q_e^*$.

As mentioned, when it is switched from the second operating mode to the first operating mode which may be indicated by switching flag sf the parameterizing of the VSM 202 and thus of the VSM control scheme 201 is performed.

Besides setting or resetting the initial values of the integrator units 305, 306, the parameterizing may further comprise setting or resetting the initial value of the integrator unit 405. The initial value of the integrator unit 405 may be set to an initial magnitude $E_0$. The initial magnitude $E_0$ may be equal to a reference initial magnitude $E_0^*$ which is the magnitude of the complex reference electromotive force $\varepsilon_2^*$.

As outlined above, after switching to the first operating mode, the operation in the first operating mode may be continued either instantly on the external reference powers $P_e^*$ and $Q_e^*$ or based on the reference powers $P_t^*$ and $Q_t^*$ generated by the transforming unit 301 (as shown in figure 3) and the transforming unit 401.

For this purpose, the transforming unit 401 may implement an equation set that is similar to the equation set implemented by transforming unit 301. The implementation of transforming unit 401 may comprise an equation set according to

$$Q_t^*(t) = (Q(t_r)-dQ(t_r))\ (1-N(t)) + Q_e^*(t)\ N(t) \qquad\qquad eq.\ 07,$$

wherein N(t) is defined as shown hereinabove.

As can be seen from equation eq. 07, the control error that is output by summation point 408 may be set to zero for $t \le t_r$. The input of the integrator unit 405 is thus also set to zero. Accordingly, the reference magnitude E* of the reference electromotive force $\varepsilon_1^*$ is equal to the reference initial magnitude $E_0^*$ of the reference electromotive force $\varepsilon_2^*$ when it is switched to the first operating mode. In the subsequent computing cycles, when it may already be operated in the first operating mode, the reference reactive power $Q_t^*$ may be smoothly transformed from $Q_t^* = Q(t_r)-dQ(t_r)$ into $Q_t^* = Q_e^*(t)$, thereby reconnecting the VSM control scheme 201 with the external power reference $Q_e^*$.

It should be clear that the power generation system 100 may already be capable of providing ancillary services while the transforming of the reference powers $P_t^*$, $Q_t^*$ into the external reference powers $P_e^*$, $Q_e^*$ is performed. It should further be clear that contrarily to the setting or resetting of the initial values, the transforming may only be performed optionally. For example, when the initial values are set or reset, but the transforming is not performed, the switching from the second operating to the first operating mode will still be smooth but associated with an abrupt change of the operating point in the subsequent computation cycles.

As can be seen from the above, the reference phase angle $\varphi_E^*$ and the respective reference magnitude E* of the reference electromotive force $\varepsilon_1^*$ are equal to the reference initial phase angle $\varphi_{E0}^*$ and the respective initial reference magnitude $E_0^*$ of the reference electromotive force $\varepsilon_2^*$, when it is switched to the first operating mode. As the reference electromotive force $\varepsilon_1^*$ is equal to the reference electromotive force $\varepsilon_2^*$, the reference current $i_1^*$ that is generated based on the reference electromotive force $\varepsilon_1^*$ is equal to the reference current $i_2^*$, when it is switched to the first operating mode. In this way, the operation may continue smoothly in the first operating mode starting from the reference current $i_1^*$ that is generated based on the last generated reference current $i_2^*$ and that thus corresponds to the current i injected to the grid based on the output of current control 208 in response to the last generated reference current $i_2^*$.

In the following, the optional part of the signal flow chart shown in figure 4 is considered. The optional part shows a modification of the control scheme of the reference magnitude generation unit 350 according to an exemplary implementation.

The modification may comprise a feed forward control structure and a proportional signal path in parallel to integrator unit 405. According to the modification, a third sum of an obtained feed forward magnitude $E_{FF}$ of electromotive force and the control error amplified by gain unit 415 may be added at summation point 409 to the output of integrator unit 405. The gain unit 415 may comprise a (predetermined) constant such that the output of gain unit 415 may comprise a product of the control error and the constant. As the summation point 409 is arranged downstream of the integrator units 405 in the shown example, the third sum has to be subtracted from the reference initial magnitude $E_0^*$. This way, it is ensured that the reference magnitude E* is equal to the reference initial magnitude $E_0^*$ when it is switched from the second operating mode to the first operating mode.

It should be clear from the above that a modification of the control scheme of the reference magnitude generation unit 350 may require modifying the computation of the initial value of the integrator unit 405. Further, it may require modifying the implementation of the transforming unit 401.

More generally spoken, the parameterizing of the control scheme of the first operating mode may comprise parameterizing all states comprised by the control scheme that have an influence on the reference current $i_1^*$ such that the reference current $i_1^*$ corresponds to reference current $i_2^*$ when it is switched from the second operating mode to the first operating mode.

It is noted that optionally, at least the computation of the output of the integrator units 305, 306 and/or 405 may be stopped or frozen, when it is operated in the second operating mode in order to reduce the required computational steps of a computational cycle. It should be clear that any remaining computation that is not related to the second operating mode may be stopped or frozen when it is operated in the first operating mode, and vice versa.

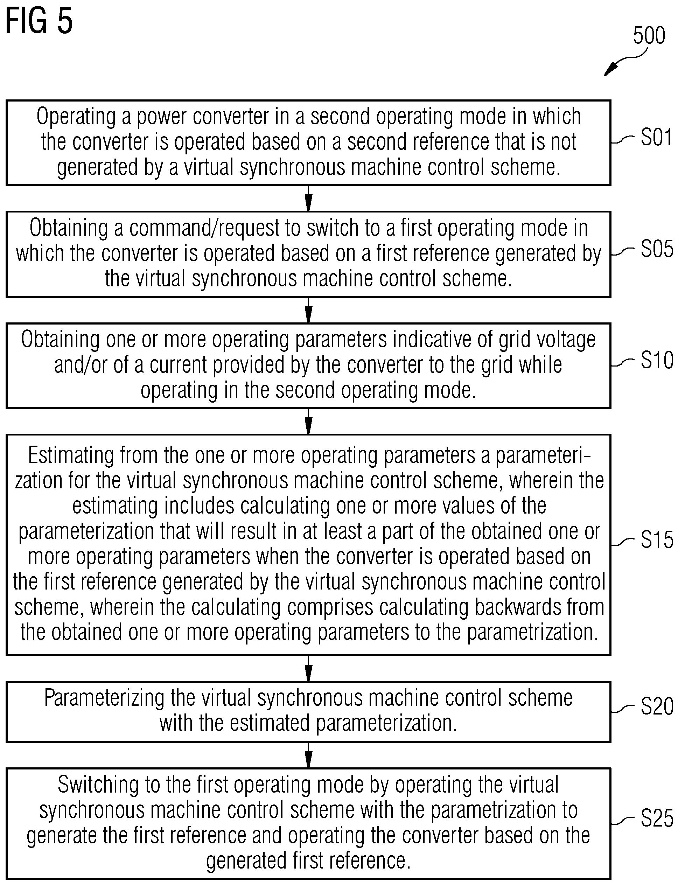

Figure 5 is a schematic flow diagram illustrating a method 500 of operating the power converter 104 according to an example. The power converter may be electrically coupled to a power grid and may output to the power grid converted electrical power. The power converter may be operable in a first operating mode in which the converter is operated based on a first reference generated by a virtual synchronous machine control and the power converter may further be operable in a second operating mode in which the converter is operated based on a second reference that is not generated by the virtual synchronous machine control scheme. In a step S01, the method 500 may comprise operating the power converter in the second operating mode. In a step S05, the method 500 may comprise obtaining a command/request to switch to the first operating mode. In response to the obtained command/request, the method 500 may comprise switching the operation of the converter from the second operating mode into the first operating mode, wherein switching the operation may comprise steps S10, S15, S20 and S25. In the step S10, the method 500 may comprise obtaining one or more operating parameters indicative of grid voltage and/or of a current provided by the converter to the grid while operating in the second operating mode. In the step S15, the method 500 may comprise estimating from the one or more operating parameters a parameterization for the virtual synchronous machine control scheme, wherein the estimating includes calculating one or more values of the parameterization that will result in at least part of the obtained one or more operating parameters when the converter is operated in this first operating mode with this first reference generated by the virtual synchronous machine control scheme. Calculating one or more values of the parameterization may comprise calculating backwards from the obtained one or more operating parameters to the parametrization. In the step S20, the method 500 may comprise parameterizing the virtual synchronous machine control scheme with the estimated parameterization. In the step S25, the method 500 may comprise switching to the first operating mode by operating the virtual synchronous machine control scheme with the parametrization to generate the first reference and operating the converter based on the generated first reference.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of operating a power converter (104), wherein the power converter is electrically coupled to a power grid (108) and outputs to the power grid converted electrical power, and wherein the power converter is operable in a first operating mode in which the converter is operated based on a first reference ($\varepsilon_1^*$) generated by a virtual synchronous machine control scheme (201), and wherein the power converter is further operable in a second operating mode in which the converter is operated based on a second reference ($i_2^*$) that is not generated by the virtual synchronous machine control scheme, wherein the method (500) comprises switching the operation of the converter from the second operating mode into the first operating mode, wherein switching the operation comprises:

   - obtaining one or more operating parameters indicative of grid voltage (v) and/or of a current (i, $i_2^*$) provided by the converter to the grid while operating in the second operating mode;
   - estimating from the one or more operating parameters a parameterization for the virtual synchronous machine control scheme, wherein the estimating includes calculating one or more values of the parameterization that will result in at least part of the obtained one or more operating parameters when the converter is operated in this first operating mode with this first reference ($\varepsilon_1^*$) generated by the virtual synchronous machine control scheme;
   - parameterizing the virtual synchronous machine control scheme with the estimated parameterization; and
   - switching to the first operating mode by operating the virtual synchronous machine control scheme with the parametrization to generate the first reference ($\varepsilon_1^*$) and operating the converter based on the generated first reference.

2. The method according to claim 1, wherein calculating one or more values of the parameterization comprises calculating backwards from the obtained one or more operating parameters to the parametrization.

3. The method according to claim 1 or 2, wherein estimating the parameterization comprises estimating from the one or more operating parameters the first reference ($\varepsilon_1^*$), wherein the estimating includes calculating one or more values for the first reference ($\varepsilon_1^*$) that will result in the at least part of the obtained one or more operating parameters when the converter is operated based on the estimated first reference ($\varepsilon_1^*$).

4. The method according to claim 3, wherein the second reference ($i_2^*$) is a reference current, wherein the obtained operating parameters include the reference current and the grid voltage (v), wherein calculating the one or more values for the first reference ($\varepsilon_1^*$) comprises calculating a reference voltage magnitude ($E^*$) and a reference phase angle (($\varphi_E^*$) from the reference current, the grid voltage (v) and a virtual impedance associated with the virtual synchronous machine control scheme (201), and/or wherein calculating the one or more values for the first reference ($\varepsilon_1^*$) comprises calculating a frequency indicative of the change of the reference phase angle.

5. The method according to any of the preceding claims, wherein a computation cycle comprises generating a value of the first and/or the second reference, and wherein both the parameterizing and the switching are performed in one computation cycle or wherein the parameterizing is performed in a first computation cycle and the switching is performed in a second computation cycle and the first computation cycle is performed before the second computation cycle.

6. The method according to any of the preceding claims, wherein the method comprises operating the power converter (104) in the first operating mode and wherein operating in the first operating mode comprises

   determining that a grid fault has occurred and,
   in response to the determining, switching from the first operating mode to the second operating mode and/or wherein operating in the second operating mode comprises obtaining an indication to switch to the first operating mode and,
   in response to the obtained indication,
   performing said switching from the second operating mode to the first operating mode,
   wherein preferably, the indication is obtained when the grid has recovered from a grid fault.

7. The method according to any of the preceding claims, wherein operating the power converter (104) in the second operating mode comprises stopping a computation of at least a portion of the virtual synchronous machine control scheme (201), wherein preferably the portion comprises one or more integrator units (305, 306, 405).

8. The method according to any of the preceding claims, wherein the virtual synchronous machine control scheme (201) comprises one or more integrator units (305, 306, 405) and each integrator unit of the one or more integrator units outputs a sum of an initial value ($E_0$, $\varphi_{E0}$, $\omega_0$) and an integral of a signal that is input to the integrator unit, wherein the parameterizing comprises setting, based on values of the estimated parameterization, one or more initial values ($E_0$, $\varphi_{E0}$, $\omega_0$) of the one or more integrator units.

9. The method according to claim 8, wherein the one or more initial conditions comprise one or more of an initial magnitude ($E_0$) of the first reference ($\varepsilon_1^*$), an initial phase angle ($\varphi_{E0}$) of the first reference ($\varepsilon_1^*$) and an initial frequency ($\omega_0$) of the first reference ($\varepsilon_1^*$).

10. The method according to any of the preceding claims, wherein a current of the converted electrical power output to the grid is controlled by a current control (208) in accordance with a controller reference current ($i^*$) and wherein the second reference ($i_2^*$) is a reference current, wherein the method comprises

   inputting the second reference ($i_2^*$) as controller reference current ($i^*$) to the current control (208) when the power controller is operated in the second operating mode, and
   wherein the switching from the second operating mode to the first operating mode comprises
   inputting a first reference current ($i_1^*$) derived from the first reference ($\varepsilon_1^*$) as controller reference current ($i^*$) to the current control (208) instead of the second reference current ($i_2^*$).

11. The method according to any of the preceding claims, wherein the converted electrical power is output to the grid in accordance with a reference power (P*, Q*) in the first operating mode, wherein the switching from the second operating mode to the first operating mode comprises

obtaining a power parameter (P, Q) indicative of the electrical power that is output to the grid when operating in the second operating mode, and
setting the reference power (P*, Q*) to the power parameter (P, Q).

12. The method according to claim 11, wherein the switching from the second operating mode to the first operating mode further comprises
transforming the reference power (P*, Q*) set to the power parameter into a further reference power ($P_e$*, $Q_e$*) in accordance with a predetermined transforming function, wherein preferably the predetermined transforming function depends on time.

13. A control system for controlling an operation of a power converter, wherein the power converter (104) is configured to be electrically coupled to a power grid (108) and to output to the power grid (108) converted electrical power, and wherein the power converter is operable in a first operating mode in which the power converter (104) is operated based on a first reference ($\varepsilon_1$*) generated by a virtual synchronous machine control scheme (201), and wherein the power converter is further operable in a second operating mode in which the converter is operated based on a second reference ($i_2$*) that is not generated by the virtual synchronous machine control scheme, wherein the control system (101) is configured to perform a method according to any of claims 1-12.

14. A power generation system comprising:

a power converter (104) configured to be electrically coupled to a power grid (108) and to output to the power grid (108) converted electrical power;
at least one power generation unit (105) configured to provide the electrical power to the power converter (104); and
a control system (101) according to claim 13, wherein the control system (101) is coupled to the power converter (104) to control the operation of the power converter.

15. A computer program for controlling the operation of a power converter, wherein the computer program comprises control instructions which, when executed by a processing unit (102) of a control system (101) controlling the operation of the power converter, cause the processing unit (102) to perform the method according to any of claims 1-12.

EP 4 358 342 A1

FIG 1

FIG 2

FIG 3

# FIG 4

# FIG 5

500

| | |
|---|---|
| Operating a power converter in a second operating mode in which the converter is operated based on a second reference that is not generated by a virtual synchronous machine control scheme. | S01 |
| Obtaining a command/request to switch to a first operating mode in which the converter is operated based on a first reference generated by the virtual synchronous machine control scheme. | S05 |
| Obtaining one or more operating parameters indicative of grid voltage and/or of a current provided by the converter to the grid while operating in the second operating mode. | S10 |
| Estimating from the one or more operating parameters a parameterization for the virtual synchronous machine control scheme, wherein the estimating includes calculating one or more values of the parameterization that will result in at least a part of the obtained one or more operating parameters when the converter is operated based on the first reference generated by the virtual synchronous machine control scheme, wherein the calculating comprises calculating backwards from the obtained one or more operating parameters to the parametrization. | S15 |
| Parameterizing the virtual synchronous machine control scheme with the estimated parameterization. | S20 |
| Switching to the first operating mode by operating the virtual synchronous machine control scheme with the parametrization to generate the first reference and operating the converter based on the generated first reference. | S25 |

Europäisches
Patentamt

European
Patent Office

Office européen
des brevets

# EUROPEAN SEARCH REPORT

Application Number

EP 22 38 3013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 832 829 A1 (ABB SCHWEIZ AG [CH]) 9 June 2021 (2021-06-09) * paragraphs [0001] - [0052], [0064] - [0086]; figures 1-14 * | 1-15 | INV. H02J3/38 H02J13/00 H02J3/00 H02J3/24 F03D7/02 |
| A | D'ARCO SALVATORE ET AL: "A synchronization controller for grid reconnection of islanded virtual synchronous machines", 2015 IEEE 6TH INTERNATIONAL SYMPOSIUM ON POWER ELECTRONICS FOR DISTRIBUTED GENERATION SYSTEMS (PEDG), IEEE, 22 June 2015 (2015-06-22), pages 1-8, XP033210015, DOI: 10.1109/PEDG.2015.7223046 [retrieved on 2015-08-25] * pages 1-8 * | 1-15 | |
| A | WO 2021/008664 A1 (VESTAS WIND SYS AS [DK]) 21 January 2021 (2021-01-21) * pages 1-5 * * pages 10-19; figures 2-6 * | 1-15 | |
| A | D'ARCO SALVATORE ET AL: "Virtual synchronous machines - Classification of implementations and analysis of equivalence to droop controllers for microg", 2013 IEEE GRENOBLE CONFERENCE, IEEE, 16 June 2013 (2013-06-16), pages 1-7, XP032519741, DOI: 10.1109/PTC.2013.6652456 [retrieved on 2013-11-01] * pages 1-7 * | 1-15 | |

TECHNICAL FIELDS SEARCHED (IPC)

H02J
F03D

-/--

The present search report has been drawn up for all claims

| Place of search | Date of completion of the search | Examiner |
|---|---|---|
| Munich | 25 April 2023 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 38 3013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 968 484 A1 (ABB SCHWEIZ AG [CH]; HITACHI ENERGY SWITZERLAND AG [CH]) 16 March 2022 (2022-03-16) * paragraphs [0004] – [0012]; figures 1-6 * ----- | 1-15 | |
| A | TAUL MADS GRAUNGAARD ET AL: "Current Limiting Control With Enhanced Dynamics of Grid-Forming Converters During Fault Conditions", IEEE JOURNAL OF EMERGING AND SELECTED TOPICS IN POWER ELECTRONICS, IEEE, PISCATAWAY, NJ, USA, vol. 8, no. 2, 27 July 2019 (2019-07-27), pages 1062-1073, XP011785931, ISSN: 2168-6777, DOI: 10.1109/JESTPE.2019.2931477 [retrieved on 2020-04-30] * pages 1,8 * ----- | 1-15 | |

**TECHNICAL FIELDS SEARCHED (IPC)**

The present search report has been drawn up for all claims

| Place of search | Date of completion of the search | Examiner |
|---|---|---|
| Munich | 25 April 2023 | Krasser, Bernhard |

EPO FORM 1503 03.82 (P04C01)

## ANNEX TO THE EUROPEAN SEARCH REPORT
## ON EUROPEAN PATENT APPLICATION NO.

EP 22 38 3013

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2023

| Patent document cited in search report | | Publication date | Patent family member(s) | | Publication date |
|---|---|---|---|---|---|
| EP 3832829 | A1 | 09-06-2021 | AU | 2020398322 A1 | 30-06-2022 |
| | | | CN | 115136440 A | 30-09-2022 |
| | | | EP | 3832829 A1 | 09-06-2021 |
| | | | EP | 4070428 A1 | 12-10-2022 |
| | | | JP | 2023505151 A | 08-02-2023 |
| | | | US | 2023010298 A1 | 12-01-2023 |
| | | | WO | 2021110532 A1 | 10-06-2021 |
| WO 2021008664 | A1 | 21-01-2021 | EP | 4000156 A1 | 25-05-2022 |
| | | | US | 2022321041 A1 | 06-10-2022 |
| | | | WO | 2021008664 A1 | 21-01-2021 |
| EP 3968484 | A1 | 16-03-2022 | NONE | | |

For more details about this annex : see Official Journal of the European Patent Office, No. 12/82

EPO FORM P0459